Europäisches Patentamt

European Patent Office

Office européen des brevets

(11) Veröffentlichungsnummer: **0 228 550**
**A2**

(12) **EUROPÄISCHE PATENTANMELDUNG**

(21) Anmeldenummer: **86115914.3**

(22) Anmeldetag: **17.11.86**

(51) Int. Cl.⁴: **E05F 15/00**

(30) Priorität: **23.11.85 DE 3541505**

(43) Veröffentlichungstag der Anmeldung:
**15.07.87 Patentblatt 87/29**

(84) Benannte Vertragsstaaten:
**AT BE CH DE ES FR GB IT LI LU NL SE**

(71) Anmelder: **Försterling, Wolfram**
**Frankfurter Strasse 70 D**
**D-6054 Rodgau 3(DE)**

(72) Erfinder: **Försterling, Wolfram**
**Frankfurter Strasse 70 D**
**D-6054 Rodgau 3(DE)**

(74) Vertreter: **Zapfe, Hans, Dipl.-Ing.**
**Seestrasse 2 Postfach 30 04 08**
**D-6054 Rodgau-3(DE)**

(54) **Verfahren zur pneumatisch-elektrischen Überwachung von beweglichen Gegenständen und Überwachungssystem für die Durchführung des Verfahrens.**

1. Verfahren und Vorrichtung zur pneumatisch-elektrischen Überwachung von Gegenständen mittels eines elastischen gasdurchströmten Sensorkörpers - (10), sowie mittels mindestens eines mit dem Sensorkörper verbundenen pneumatisch-elektrischen Wandlers (17,18), durch den im Sensorkörper (10) erzeugte Druckänderungen in elektrische Signale umgesetzt werden. Zur Erzeugung einer Eigensicherheit des Systems wird bzw. werden

a) in dem Sensorkörper (10) durch geregelte Gaszufuhr und durch eine vorgegebene Leckrate ein zwischen zwei Grenzwerten liegender vorgegebener Betriebs-Druckpegel aufrechterhalten,

b) die Druckwerte auf beiden Seiten des Sensorkörpers (10) mittels zweier pneumatisch-elektrischer Wandler (17,18) laufend überwacht und bei Unregelmäßigkeiten ein Sperrsignal erzeugt und

c) die Gaszufuhr gleichfalls laufend überwacht und bei einem vorgegebenen Unterschreiten der Lieferrate gleichfalls ein Sperrsignal erzeugt.

FIG. 1

**" Verfahren zur pneumatisch-elektrischen Überwachung von beweglichen Gegenständen und Überwachungssystem für die Durchführung des Verfahrens "**

(57) Die Erfindung betrifft ein Verfahren zur pneumatisch-elektrischen Überwachung von beweglichen Gegenständen wie Türen, Tore, Sicherheitsschranken und Ventilschieber, mittels eines langgestreckten gasdurchströmten Sensorkörpers, der von einer druckabhängig geschalteten Druckgasquelle mit Gas versorgt wird und dessen Volumen durch äußere Krafteinwirkung veränderbar ist, sowie mittels mindestens eines mit dem Sensorkörper verbundenen pneumatisch-elektrischen Wandlers, durch den im Sensorkörper erzeugte Druckänderungen, die maximale und/oder minimale Grenzwerte über-bzw. unterschreiten, in elektrische Signale umgesetzt werden.

Die Erfindung betrifft weiterhin ein pneumatisch-elektrisches Überwachungssystem für die genannten bewegliche Gegenstände wie Türen, Tore, Sicherheitsschranken und Ventilschieber, mit einem gasgefüllten, hohlen Sensorkörper, der an eine druckabhängig geschaltete Druckgasquelle angeschlossen ist und dessen Volumen durch äußere Krafteinwirkung veränderbar ist und der mit mindestens einem pneumatisch-elektrischen Wandler versehen ist, von denen mindestens einer mindestens einen elektrischen Signalgeber aufweist, der in der Stellung "Normalbetrieb" ein Freigabesignal und in der Stellung "Druckänderung" ein Sperrsignal erzeugt und der mindestens einem Schaltglied am Ausgang des Überwachungssystems aufgeschaltet ist.

Derartige Überwachungsmaßnahmen bzw. -systeme dienen der Sicherheit von Personen, beispielsweise bei kraftbetätigten Türen (z.B. in öffentlichen Verkehrsmittels) und Toren (z.B. Roll-oder Schiebetore) sowie bei Sicherheits-Überwachungseinrichtungen an Maschinen, bei denen eine Fehlbedienung zu schweren körperlichen Schäden führen kann, wie beispielsweise bei Stanzen, Pressen oder bei Schallschutzkabinen bei Ultraschall-Schweißmaschinen.

Die betreffenden Sensorkörper bestehen in der Regel aus Gummischläuchen, die an einer der Längskanten der beweglichen Gegenstände angeordnet sind, oder aus sogenannten Trittmatten mit Mehrfachkanälen.

Es geht darum, eine Anzeige, ein Warnsignal, eine Blockierung oder Stillsetzung der gesamten Einrichtung herbeizuführen, die mit einem solchen Überwachungssystem ausgestattet ist. Dies geschieht dadurch, daß der Sensorkörper bei seiner Berührung mit einem Körperteil oder Gegenstand, der sich in unzulässiger Weise in der Bewegungsbahn des bewegten Gegenstandes befindet, einen Druckstoß erzeugt, der in eine elektrische Signalauslösung umgesetzt werden kann.

Zum Stande der Technik gehören sogenannte Druckwellenschalter, die mit dem Innenvolumen des Sensorkörpers in Verbindung stehen und einen Membranschalter aufweisen, bei dem auf beiden Seiten der Membran einstellbare Kontakte vorhanden sind, die mit auf der Membran befindlichen Gegenkontakten zusammenwirken. Bei einem positiven oder negativen Druckstoß erzeugt die Membran einen der Druckänderungsrichtung entsprechenden Schaltimpuls, der die vorstehend beschriebenen Sicherheitsfunktionen auslösen kann. Das bekannte System besitzt jedoch keine Eigensicherheit, wenn beispielsweise die Zuleitung abgetrennt oder abgequetscht ist oder wenn der Sensorkörper ein Leck aufweist.

Durch die DE-AS 21 27 207 sind ein Verfahren und ein Überwachungssystem der eingangs beschriebenen Art bekannt, bei denen angesaugte Luft in einen an seinem jenseitigen Ende offenen Schlauch gefördert wird, in dem kein Betriebs-Druck-Pegel aufrecht erhalten wird. Im Falle der Einklemmung eines Gegenstandes findet durch Abquetschen des Schlauches ein Druckanstieg statt, der eine Störung signalisiert. Störungen im System selbst können jedoch nicht erfaßt werden, wie beispielsweise ein Ausfall der Pumpe, und/oder ein Leck im Schlauch und/oder in der Druckleitung zum Druckschalter, eine Kontaktverschweißung im Schalter, ein Verstopfung der Pumpe auf der Eingangsseite und eine Unterbrechung der Stromversorgung.

Durch die DE-OS 27 12 173 ist eine elektropneumatische Sicherheitssteuerung bekannt, die an den Enden eines Druckgebers zwei voneinander unabhängige Druckwellenschalter aufweist. In dem Druckgeber herrscht jedoch im Normalzustand Atmosphärendruck, und ein etwaiger Druckstoß oder eine Druckwelle wird den beiden Druckschaltern mitgeteilt. Zur Lösung der Aufgabe, die Sicherheitssteuerung bei einer Störung noch eine beschränkte Zeitdauer weiter betreiben zu können, sind den Druckwellenschaltern Relais mit mehreren Kontakten sowie eine Störungsüberbrückungseinrichtung zugeordnet, die bei einem Nicht-Ausschalten des einen Relais und/oder einem Defekt im Druckgeber das andere Relais während einer bestimmten Zeitspanne die Funktion des ersten Relais übernehmen läßt. Soweit es sich um einen Einklemmschutz handelt, ist als Druckgeber ein Zweikammer-Luftbehälter vorgesehen, von dem jede Kammer nur mit einem einzigen Druckwellenschalter ausgestattet ist. Dadurch handelt es sich nur um eine verdoppelung des Systems, bei dem eine Zerstörung einer der beiden Kammern zu einer Störungsmeldung führt. Weitere Systemfehler, wie die Verstopfung von Leitungen, Leitungsunterbrechungen und zwei zeitgleich auftretende Fehler im pneumatischen Teil werden von diesem System nicht erkannt.

Der Erfindung liegt daher die Aufgabe zugrunde, ein Überwachungsverfahren bzw. ein Überwachungssystem der eingangs beschriebenen Gattung anzugeben, das sowohl bei einer äußeren Beeinflussung als auch bei allen erdenklichen Störungen innerhalb des Überwachungssystems eigensicher arbeitet, d.h. die Störung anzeigt und/oder die Vorrichtung, zu der das Überwachungssystem gehört blockiert oder stillsetzt.

Die Lösung der gestellten Aufgabe erfolgt bei dem eingangs beschriebenen Verfahren erfindungsgemäß dadurch, daß man:

a) in dem Sensorkörper durch druckabhängig geregelte Gaszufuhr von einer Druckgasquelle auf der einen Seite und durch eine vorgegebenen Leckrate auf der anderen Seite des Sensorkörpers einen zwischen den Grenzwerten liegenden vorgegebenen Betriebs-Druckpegel aufrechterhält,

b) der eingeregelte Betriebs-Druckpegel auf beiden Seiten des Sensorkörpers mittels zweier pneumatisch-elektrischer Wandler laufend überwacht und bei Einhaltung des vorgegebenen Betriebs-Druckpegels auf beiden Seiten des Sensorkörpers ein Freigabesignal und bei vorgegebener Abweichung vom Betriebsdruckpegel auf mindestens einer Seite des Sensorkörpers ein Sperrsignal erzeugt und

c) die Lieferrate der Druckgasquelle gleichfalls laufend überwacht und bei einem vorgegebenen Unterschreiten der Lieferrate gleichfalls ein Sperrsignal erzeugt.

Die Lösung der gestellten Aufgabe erfolgt bei dem eingangs beschriebenen Überwachungssystem erfindungsgemäß dadurch, daß:

a) ein erster pneumatisch-elektrischer Wandler (17) außer dem mindestens einen elektrischen Signalgeber (3) für das Freigabesignal und das Sperrsignal mindestens einen weiteren Signalgeber (1, 2) zur Erzeugung von Regelsignalen für die Druckgasquelle (19) aufweist, derart, daß im System ein im wesentlichen konstanter Betriebs-Druckpegel erzeugbar ist.

b) dem einen Signalgeber (3) des ersten pneumatisch-elektrischen Wandlers (17) ein am Ausgang befindliches erstes Schaltglied (A) nachgeordnet ist, das in Stellung "Normalbetrieb" auf Durchgang schaltbar ist,

c) ein zweiter pneumatisch-elektrishcer Wandler (18) mit einem weiteren Signalgeber (4) vorhanden ist, der in der Stellung "Normalbetrieb" ein zweites Schaltsignal erzeugt,

d) dem Signalgeber (4) des zweiten pneumatisch-elektrischen Wandlers (18) ein am Ausgang befindliches zweites Schaltglied (B) nachgeordnet ist, das in Stellung "Normalbetrieb" auf Durchgang schaltbar ist,

e) im pneumatischen Teil des Systems eine Auslaßöffnung (41) mit definiertem Querschnitt zur Erzeuguang des Betriebs-Druckpegels und einer vorgegebenen Leckrate angeordnet ist,

f) eine Überwachungsschaltung (42) für die Druckgasquelle (19) mit einer derartigen Ansprechcharakteristik vorgesehen ist, daß beim Ausbleiben eines Druckgasnachschubs innerhalb einer vorgebbaren Zeitspanne eine Stillsetzung des elektrischen Teils des Systems erfolgt, und daß

g) der erste (17) und der zweite pneumatisch-elektrische Wandler (18) in der Weise ausgelegt sind, daß bei Vorliegen einer "Störung" im pneumatischen Teil des Systems mindestens einer der die Schaltsignale erzeugenden Signalgeber (3, 4) in eine "Sperrstellung" umschaltet.

Beim Erfindungsgegenstand werden zwei Druckwandler verwendet, d.h. Druckgeber, die differenzierte Druckwerte mit mehr als zwei Schaltzuständen in elektrische Signale umwandeln. Man kann das der Erfindung zugrundeliegende Prinzip als pneumatische Waage bezeichnen. Nur eine definierte Balance innerhalb des pneumatischen Systems ermöglicht die Erkennung von Störungen dieses Gleichgewichts, das durch den Betriebs-Druckpegel dargestellt wird.

Wegen des durch die definierte Leckage bedingten ständigen Regelvorgangs pendelt der tatsächliche Betriebsdruck um den angegebenen Mittelwert, ohne jedoch eine Schalthandlung in Sinne einer Störungsmeldung oder Warnung auszulösen. Erst wenn die Stellungsabweichungen der Wandler dei Grenzwerte unter-bzw. Überschreiten, erfolgt eine Schalthandlung im Sinne einer Störmungmeldung oder einer Abschaltung der vom Überwachungssystem gesicherten Vorrichtung.

Durch die angegebenen Maßnahmen bzw. Mittel wird zwischen den maximalen und minimalen Druckwerten, die in einem solchen System auftreten können, wobei ein sehr hoher maximaler Druckwert durch einen Schlag oder Stoß auf den Sensorkörper erzeugt werden kann und der Druckwert "Null" durch einen Systemausfall oder ein Leck im Sensorkörper auftreten kann, bei einem etwa in der Mitte dazwischenliegenden Druckpegel, dem sogenannten Betriebsdruckpegel, ein weitgehend konstanter Druck erzeugt. Jede Abweichung von diesem Druck, die ein gewisses vorgegebenes Maß überschreitet, sei es nach unten oder sei es nach oben, erzeugt an beiden oder auch nur an einem der beiden pneumatisch-elektrischen Wandler eine Stellungsänderung, die an beiden oder an einem der ausgangsseitig vorhandenen Schaltglieder eine Schalthandlung erzeugt, die zu einem Warnsignal, zu einer Blockierung oder Stillsetzung der überwachten Einrichtung führt. Selbst dann, wenn durch eine Verstopfung der Auslaßöffnung - (Düse) der Druckpegel konstant gehalten wird, das System also **scheinbar** in Ordnung ist, weil nämlich die beiden pneumatisch-elektrischen Wandler keine Stellungsänderung ausführen, wird durch das Ausbleiben eines Druckgas-Nachschubs in dem zugehörigen Überwachungskreis gleichfalls eine Störungsmeldung bzw. ein Sperrsignal erzeugt. Aber auch wenn im elektrischen Teil des Überwachungssystems, d.h. im Servosystem und/oder im Schaltsystem ein Defekt eintritt, sei es durch den Ausfall eines der Signalgeber, sei es durch den Ausfall eines anderen elektronischen Bauteils, so wird auch dann sofort ein Störungs- bzw. Sperrsignal erzeugt, weil auch eine solche Störung die Symmetrie im elektrischen System aufhebt und zu einem Ansprechen mindestens eines der ausgangsseitigen Schaltglieder A oder B führt.

Ein solches System kann auch als "eigensicher" bezeichnet werden. dh. bei jeder möglichen Störung schaltet das System auf die "sichere Seite" um.

Der im System anzuwendende Druck kann im Prinzip beliebige Werte aufweisen, jedoch hat sich in der Praxis ein Überdurck zwischen 10 und 20 mbar als besonders geeignet erwiesen.

Die pneumatisch-elektrischen Wandler können auf unterschiedliche Weise ausgeführt sein, wobei im Prinzip jede Einrichtung infrage kommt, mittels welcher eine Umwandlung eines Drucks in ein auswertbares Signal möglich ist, wobei sowohl durchproportionale Ausgangssignale als auch Sprungfunktionen in Form von Treppenkurven möglich sind. Die Signalgeber werden dabei durch rein elektrische Schaltelemente gebildet. Bei mechanischen Wandlern wird im Prinzip eine druckabhängige Volumensänderung eines Stellgliedes in eine Langeänderung einer Scheibe, Platte oder Trommel umgesetzt, die Zonen selektiver, d.h. unterschiedlicher Eigenschaften aufweisen, die von entsprechenden Sensoren abgetastet bzw. abgefragt werden können, die einen elektrischen Ausgang aufweisen. Bei mechanischen Systemen ist jedoch bevorzugt auf möglichst geringe Massenträgheit bzw. ein möglichst geringes Trägheitsmoment zu achten, um ein schnelles Ansprechen zu gewährleisten.

Die Abtastung kann dabei auf optischem Wege erfolgen, z.B. durch eine Lichtschranke oder einen sogenannten Opto-Koppler, deren Strahlengang durch die Scheibe selektiv freigegeben oder blockiert wird, was durch entsprechende Ausschnitte in einer ansonsten undurchsichtigen Scheibe herbeigeführt werden kann oder durch transparente Fenster in der Scheibe, wenn beispielsweise der Rest der Scheibe mit einer undurchsichtigen Be schichtung versehen wird. Ganz besonders vorteilhaft wird eine Wellenlänge im Infrarot-Bereich angewandt, um die Signalgeber gegenüber Umgebungslicht unbeeinflußbar zu machen.

Es ist aber andererseits auch möglich, als Sensoren Magentsensoren zu verwenden und die Scheibe der pneumatisch-elektrischen Wandlers mit örtlich unterschiedlichen, d.h. selektiv verschiedenen magnetischen Eigenschaften zu versehen, was durch Bedrucken mit einem bestimmten Muster und/oder entsprechende Ausschnitte in einer ansonsten aus einem dünnen Magnetwerkstoff bestehenden Scheibe bewirkt werden kann.

Es ist dabei besonders vorteilhaft, die Scheiben als Kreisscheiben auszubilden, sie um je eine zentrale Achse drehbar zu lagern und an ihrer Peripherie mit Sektoren selektiver Durchlässigkeit zu versehen.

Weitere vorteilhafte Ausgestaltungen des Erfindungsgegenstandes sind in den übrigen Unteransprüchen offenbart; ihre Vorteile werden in der Detailbeschreibung näher erläutert.

Ein Ausführungsbeispiel des Erfindungsgegenstandes wird nachfolgend anhand der Figuren 1 bis 12 näher erläutert.

Es zeigen:

Figur 1 eine schematische Darstellung des mechanisch-pneumatischen Teils einer Vorrichtung zusammen mit den Signalgebern und einem Blockschaltbild für die Druckregelung (Servokreis),

Figur 2 ein Schaltbild der verschiedenen elektronischen Schaltkreise,

Figuren 3/4 die Grundstellung ("außer Betrieb") der Scheiben der beiden pneumatisch-elektrischen Wandler relativ zu ihren Signalgebern,

Figuren 5/6 die Betriebsstellung der beiden Scheiben in ungestörtem Zustand des Systems,

Figur 7 die Scheibenbewegung des ersten Wandlers bei der Druckregelung im Falle eines allmählich absinkenden Druckes,

Figur 8 die Scheibenbewegung bei einem geringfügigen Druckanstieg (durchschwache Krafteinwirkung),

Figuren 9/10 die relativen Stellungen der beiden Scheiben zueinander im Falle der Abquetschung einer Leitungsverbindung oder des Sensorkörpers zwischen den beiden pneumatisch-elektrischen Wandlern,

Figur 11 die Bewegung der Scheibe des ersten pneumatisch-elektrischen Wandlers beim Auftreten einer Druckwelle durch Belastung des Sensorkörpers und

Figur 12 einen Axialschnitt durch eine der Scheiben zusammen mit einem der Signalgeber.

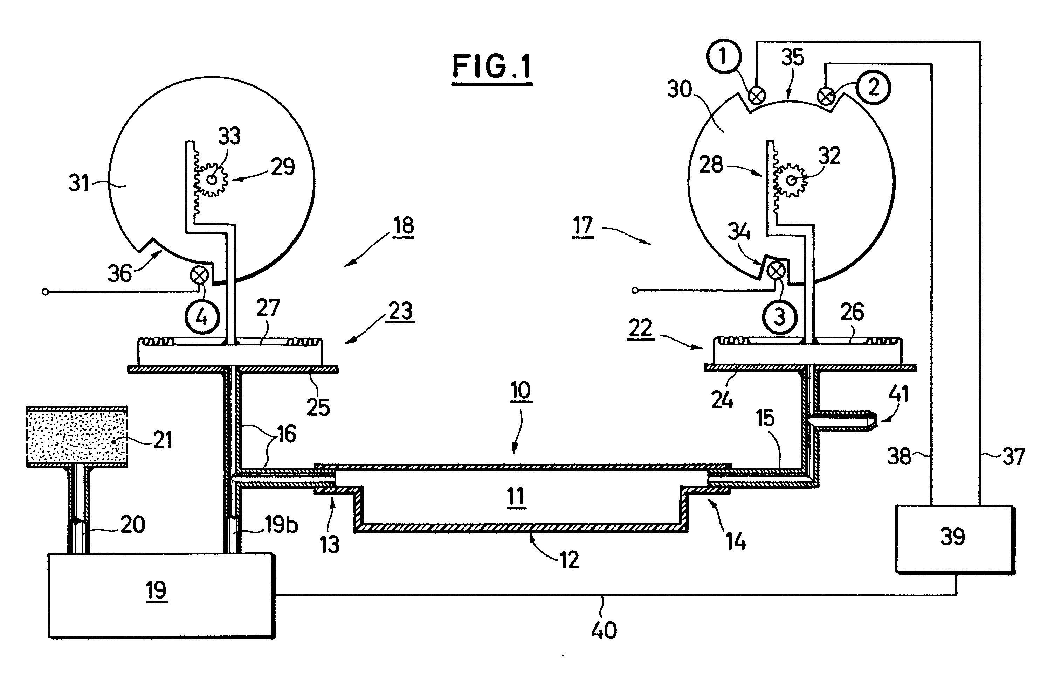

In Figur 1 ist ein Sensorkörper 10 gezeigt, der aus einem Schlauch aus einem elastomeren Werkstoff besteht und einen Hohlraum 11 umschließt, in dem auf die nachstehend noch näher beschriebene Weise ein geringer Überdruck und eine ganz geringe Gasströmung (Luft) aufrechterhalten werden. Ein auf die Unterseite 12 ausgeübter Schlag oder Druck, der eine elastische Verformung des Sensorkörpers 10 zur Folge hat, pflanzt sich infolgedessen als Druckerhöhung über die beiden Anschlußenden 13 und 14 des Sensorkörpers fort.

Jedes Anschlußende 14 bzw. 13 ist über ein dünne Leitung 15 bzw. 16 mit je einem pneumatisch-elektrischen Wandler 17 bzw. 18 verbunden, deren Bauweise nachstehend noch näher erläutert wird. In die Leitung 16 mündet die Druckleitung 19b einer elektrisch angetriebenen Pumpe 19, deren Saugleitung 20 an ein Filter 21 angeschlossen ist.

Die Pumpe 19 ist eine sogenannte Schlauchpumpe, deren Wirkungsprinzip darauf beruht, daß auf einem auf einer Kreisbahn verlegten Schlauch eine Mehrzahl (vorzugsweise fünf) von Quetschrollen abgewälzt werden, die in einer rotierenden Halterung gelagert sind. Die zwischen den Quetschstellen eingeschlossenen Volumina werden kontinuierlich durch den Schlauch hindurchbewegt und in den Hohlraum 11 gepumpt. Das Filter 21 dient nicht nur zum Fernhalten von Verunreinigungen aus der Umgebungsluft, sondern auch zur weitgehenden Glättung von Druckunregelmäßigkeiten.

Die pneumatisch-elektrischen Wandler 17 und 18 bestehen aus je einem Hohlkörper 22 und 23, der dadurch gebildet wird, daß auf einer Grundplatte 24 bzw. 25 eine elastische Membran 26 bis 27 befestigt ist. Die Leitungen 15 bzw. 16 münden in die Hohlkörper 22 bzw. 23. Die elastischen Membranen haben eine Beschaffenheit, wie dies von den Membranen der sogenannten Aneroid-Barometer her bekannt ist.

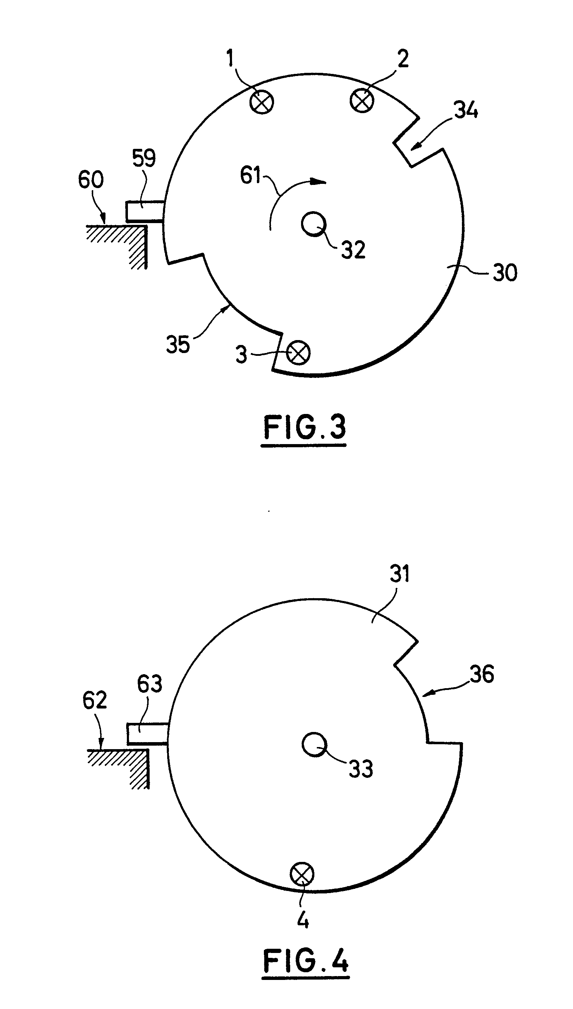

Jede der Membranen 26 bzw. 27 wirkt über ein nur sehr schematisch dargestelltes Getriebe 28 bzw. 29 auf eine Scheibe 30 bzw. 31 ein, die auf einer Achse 32 bzw. 33 schwenkbar bzw. begrenzt drehbar gelagert ist. Die Scheibe 30 weist zwei Sektoren 34 und 35 selektiver Durchlässigkeit auf, die Scheibe 31 einen analogen Sektor 36. Die Sektoren werden dabei durch fensterförmige Ausschnitte in einem ansonsten lichtundurchlässigen Folienmaterial gebildet. Es ist erkennbar, daß die Scheiben 30 und 31 als Kreisscheiben ausgebildet sind, und daß die Sektoren 34, 35 und 36 an der Peripherie der Scheiben angeordnet sind. Auf die genaue Ausbildung der Scheiben, die Lage und Größe der Sektoren wird im Zusammenhang mit den Figuren 3 bis 12 noch näher eingegangen werden.

Der pneumatisch-elektrische Wandler 17 wird nachfolgend als der erste Wandler bezeichnet, weil er der für die Druck-und Strömungsregelung entscheidenden Funktionen zusätzlich mit steuert. Die in Figur 1 gezeigte Reihenfolge der Wandler stellt den Optimalfall dar, aber die beiden Wandler können naturgemäß auch vertauscht werden. Der Wandler 17 besitzt insgesamt drei elektrische Signalgeber 1, 2 und 3, während der Wandler 18 nur einen analogen Signalgeber 4 besitzt. Das Zusammenwirken dieser Signalgeber mit den Scheiben 30 und 31 wird anhand der nachfolgenden Figuren noch näher erläutert. Durch eine gleich große Druckerhöhung in den Hohlkörpern 22 und 23 führen die Scheiben 30 eine gleich große und gleichsinnige (Uhrzeigersinn) Drehung aus, jedoch sei betont, daß dies nicht unbedingt so sein muß.

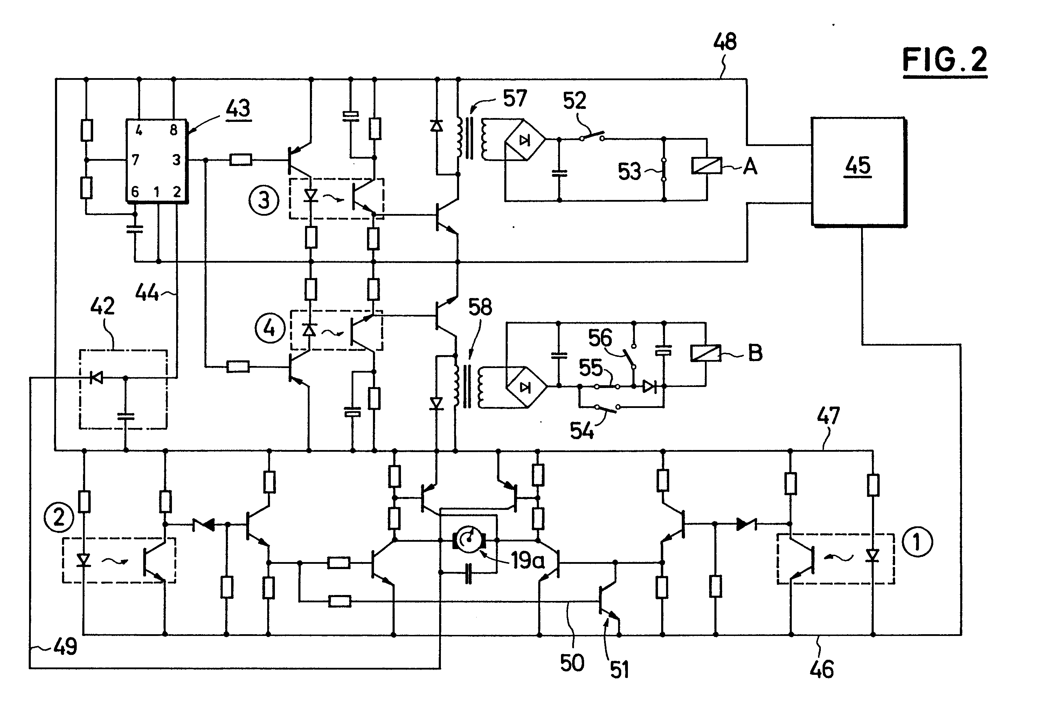

Die Signalgeber 1 und 2 sind über Leitungen 37 und 38 mit einem Regler 39 verbunden, dem sogenannten Servoregler, der über ein Leitung 40 die Druckgasquelle 19 in der Weise ansteuert, daß in dem Sensorkörper 10 ein im wesentlichen konstanter Druck erzeugt wird. Als Druckfühler dient der Wandler 17 in Verbindung mit den Signalgebern 1 und 2, was weiter unten gleichfalls noch im Detail erläutert wird. Die Signalgeber 3 und 4 sind diejenigen, die das erste und zweite Schaltsignal für die am Ausgang des Schaltkreises nach Figur 2 liegenden Schaltglieder A und B erzeugen.

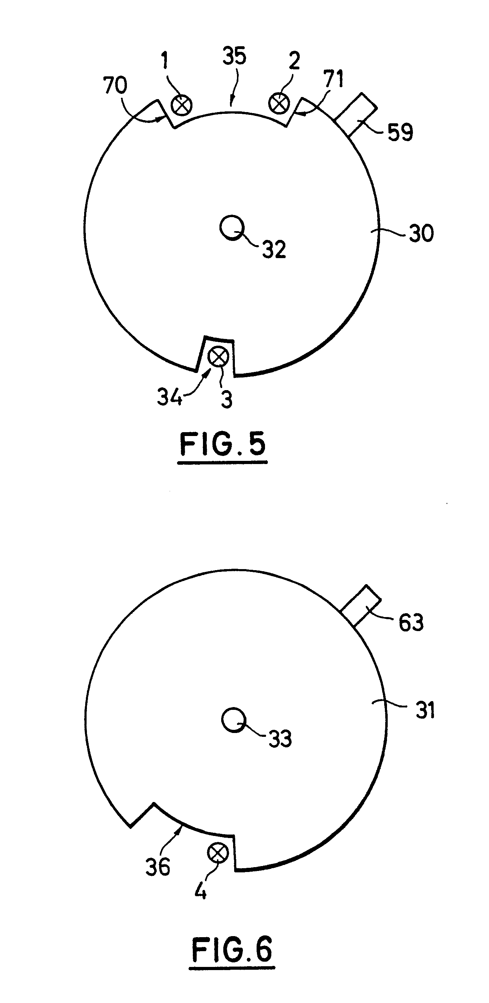

Figur 1 zeigt die Scheiben 30 und 31 in einer Stellung gemäß den Figuren 5 und 6, in der das System den ungestörten Zustand anzeigt, d.h. die Signalgeber 3 und 4 sind auf Durchgang geschaltet.

Ein sehr wesentlicher Teil des Erfindungsgegenstandes ist eine im pneumatischen Teil des Systems angeordnete Auslaßöffnung 41, die als Düse oder Blende ausgeführt sein kann und bei gegebenem Druck einen genau definierten Gasdurchsatz, die sogenannte "Leckrate" zuläßt. Diese Leckrate soll sehr gering sein; sie hat zur Folge, daß die Druckgasquelle 19 von Zeit zu Zeit Gas in den Sensorkörper 10 nachliefern muß. Unterbleibt dies, beispielsweise weil die Auslaßöffnung verstopft oder das pneumatische System an einer beliebigen Stelle abgeklemmt ist, dann wird dies mittels einer Überwachungsschaltung 42 erfaßt -

(Figur 2), die eine solche Ansprechcharakteristik aufweist, daß beim Ausbleiben eines Druckgasnachschubs innerhalb einer vorgegebenen Zeitspanne eine Stillsetzung des den elektrischen Teil des Systems steuernden Mikroprozessors 43 über eine Leitung 44 herbeigeführt wird.

Die Auslegung von Pumpleistung, Düsenquerschnitt und Betriebsdruckpegel erfolgt dabei zweckmäßig in der Weise, daß die Pumpe etwa 5 bis 10 mal pro Minute anläuft, so daß entsprechend kurze Warnzeiten gewährleistet sind.

Figur 2 zeigt nur den elektrischen Teil des Systems, und zwar einschließlich der Signalgeber 1, 2, 3 und 4, die als eine Kombination von Leuchtdiode (für Infrarot-Strahlung) und Fototransistor dargestellt sind (gestrichelte Umrandung). Der elektrische Teil des Systems besitzt eine Stromversorgung 45 und eine Leitungsführung, von der hier die nur symbolisch zu verstehenden Stromschienen 46, 47 und 48 hervogehoben werden sollen. Zwischen den Stromschienen 46 und 47 liegt das sogenannte Servo-System, das in Figur 1 durch den Regler 39 dargestellt ist. Zu diesem Servosystem gehören die Signalgeber 1 und 2 sowie die Druckgasquelle 19, von der hier nur der Antriebsmotor 19a dargestellt ist. Es ist zu erkennen, daß einer der Anschlußkontakte des Motors 19a über eine Leitung 49 mit der bereits weiter oben beschriebenen Überwachungsschaltung 42 verbunden ist, deren Ausgangssignal seinerseits über die Leitung 44 dem Mikroprozessor 43 aufgeschaltet ist. Ein Anlaufen des Systems aus der Ruhestellung gemäß den Figuren 3 und 4 ist deshalb möglich, weil zunächst der Signalgeber 1 über die Leitung 50 und den Transistor 51 verriegelt ist.

Der zwischen den Stromschienen 47 und 48 liegende Teil der Schaltungsanordnung nach Figur 2 ist das sogenannte Schaltsystem, in dem auch die Signalgeber 3 und 4 liegen. Wegen der allgemein verständlichen Symboldarstellung bedürfen hier nur noch folgende Einzelheiten der Erläuterung. Zwischen den Schaltgliedern 52 und 53 einerseits und dem Schaltglied B andererseits besteht einer hier nicht gezeigte Verbindung, und zwar sind beim Ansprechen des Schaltgliedes B das Schliedglied 52 geschlossen und das Schaltglied 53 geöffnet. Weiterhin sind die Schaltglieder 52, 53 und 54 gegenseitig zwangsgeführt, desgleichen die Schaltglieder 55 und 56 untereinander. Wenn in dem Schaltungsteil zwischen den Stromschienen 47 und 48 ein Durchschlag und/oder eine Unterbrechung erfolgt, ist der Signalweg unterbrochen, und mindestens einer der Transformatoren 57 und 58 wird nicht versorgt, so daß sofort eine Störung gemeldet wird.

Die Schaltglieder A und B sind diejenigen, die durchgeschaltet sein müssen, um den normalen, d.h. ungestörten Betriebszustand des Systems anzuzeigen.

Einzelheiten des Zusammenwirkens der Anordnungen nach Figur 1 und 2 werden nunmehr anhand der Figure 3 bis 12 näher erläutert.

Figur 3 zeigt die Scheibe 30 des ersten Wandlers 17 in der Grundstellung ("außer Betrieb"). Die Scheibe ruht mit einem Nochen 59 auf einem Anschlag 60 und kann aus dieser Stellung nur in Richtung des Pfeils 61 anlaufen. Die Signalgeber 1, 2 und 3 sind abgedunkelt bzw. gesperrt, da sich sowohl der Regelsektor 35 als auch der Schaltsektor 34 außerhalb der Strahlengänge der betreffenden Signalgeber befinden. Ein Anlauf des Systems bzw. ein Druckaufbau aus dieser Position ist infolgedessen nur wegen der weiter oben beschriebenen Maßnahmen möglich (Leitung 50, Transistor 51).

Die zugeordnete Stellung der Scheibe 31 des zweiten Wandlers 18 ist in Figur 4 dargestellt. Der Schaltsektor 36 befindet sich gleichfalls außerhalb des Strahlengangs des Signalgebers 4. Eine analoge Abstützung auf einem Anschlag 62 erfolgt auch hier mittels eines Nockens 63.

In die Stellung nach den Figuren 3 und 4 geraten die Scheiben 30 bzw. 31 auch nach einem totalen Druckausfall, beispielsweise durch einen Defekt in der Druckmittelquelle 19 oder durch ein großes Leck im pneumatischen System, insbesondere im Sensorkörper 10. In diesem Falle sind die Signalgeber 3 und 4 beide gesperrt, und das System schaltet auf "Störung".

Die Figuren 5 und 6 zeigen das System im Beharrungszustand und bei störungsfreier Arbeitsweise. Es sei auch angenommen, daß sich der Druck im System genau in der Mitte des Regelbereichs befindet. In diesem Falle liegen die für das Servosystem maßgebenden Signalgeber 1 und 2 ziemlich genau symmetrisch im Regelsektor 35, d.h. beide Strahlengänge sind vollständig freigegeben. Die Freigabe der Strahlengänge gilt auch für die Signalgeber 3 und 4, so daß der störungsfreie Betrieb des Überwachungssystems signalisiert wird.

Aus Figur 6 ist auch ersichtlich, daß der Schaltsektor 36 der Scheibe 31 des zweiten Wandlers in Umfangsrichtung sehr viel größer ist und relativ zur Stellung der Scheibe 30 des ersten Wandlers eine solche Winkelstellung aufweist, daß das ausgangsseitige Schaltglied B anspricht bevor das ausgangsseitige Schaltglied A ansprechen kann. Es ist nämlich die Forderung zu erfüllen, daß die Freigabe des Systems durch das vorrangige Ansprechen des Schaltgliedes B erfolgen muß.

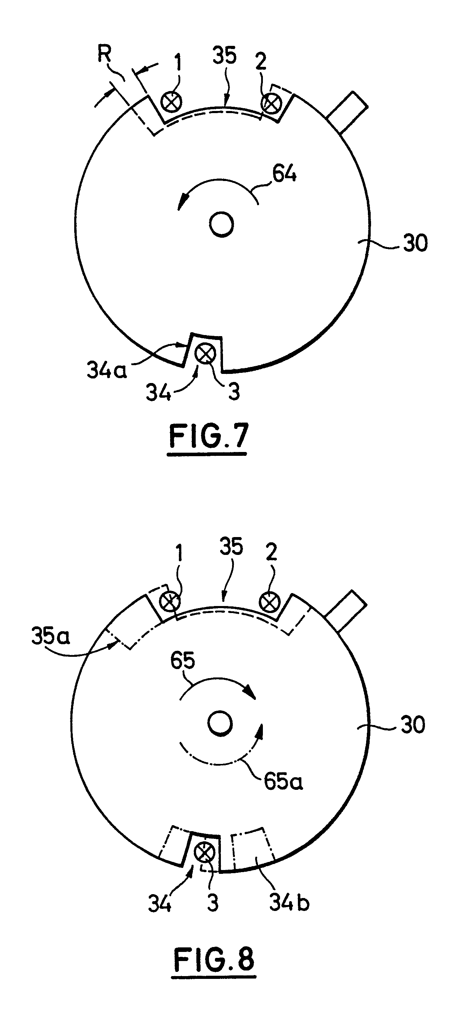

Figur 7 zeigt, was im Normalbetrieb wegen der gezielten Leckage des pneumatischen Systems und der Notwendigkeit eines regelmäßigen Nachschubes von Druckgas geschieht: Aufgrund des durch die Leckage bedingten Druckverlustes läuft die Scheibe 30 in Richtung des Pfeils 64 - (Gegenuhrzeigersinn) zurück, und der Regelsektor 35 gelangt hierbei in die gestrichelt dargestellte Position. Hierdurch wird der Signalgeber 2 soweit verdunkelt, daß durch den Servokreis (Figur 2) der Motor 19a eingeschaltet wird, so daß die Druckgasquelle die Scheibe 30 wieder in die ursprüngliche Stellung zurückführt (Figur 5). Die Scheibe 30 pendelt dabei um die Regelabweichung $\Delta R$ hin und her, was durch die mittels der Düse vorgegebene Leckrate etwa 5 bis 10 ml pro Minute geschieht. Um bei diesem Pendeln nicht den Signalgeber 3 zu beeinflussen, ist der Schaltsektor 34 mit einer radialen Steuerkante 34a versehen, die soweit vom Signalgeber 3 entfernt ist, daß bei der Pendelbewegung nach Maßgabe der Regelabweichung $\Delta R$ keine Beeinflussung des Signalgebers 3 erfolgen kann.

Einen ähnlichen Effekt wie die permanente Leckrate verursacht natürlich auch eine thermische Abkühlung des gesamten Systems. Diese geschieht jedoch so langsam, daß eine Kompensation durch die Druckgasquelle erfolgt, wobei kurzzeitig die anhand von Figur 7 beschriebenen Vorgänge ablaufen. Die Scheibe 31 des zweiten Wandlers hat hierbei im wesentlichen die Stellung gemäß Figur 6. Sie führt jedoch aufgrund der quasi-starren pneumatischen Koppelung dieselben Pendelvorgänge nach Maßgabe der Regelabweichung aus.

Eine allmähliche Temperaturerhöhung hat keinen merklichen Einfluß auf die anhand der Figur 7 beschriebenen Vorgänge, weil nämlich durch eine sorgfältige Abstimmung der Leckrate im Hinblick auf die maximal mögliche Gasausdehnung sichergestellt wird, daß sich die Scheibe 30 aus der in Figur 5 dargestellten Position durch eine Erhöhung der Umgebungstemperatur nicht merklich im Uhrzeigersinne verdreht, so daß jedenfalls keine Abschattung des Signalgebers 3 erfolgt. Allenfalls wird die Zeit bis zum Wiedereinschalten der Pumpe durch die thermische Gasausdehnung geringfügig verzögert, wobei jedoch die Überwachungseinrichtung der Druckgasquelle so eingestellt werden kann, daß eine Störungsmeldung nur dann erfolgt, wenn ein Einschaltsignal **wesentlich** länger ausbleibt, als dies den üblichen Schaltintervallen bei einer stationären Regelung entspricht. So kann beispielsweise durch ein Zeitglied erreicht werden, daß eine Störungsmeldung für die Dauer von 30 bis 60 Sekunden unterbleibt. Diese Zeitspanne ist im Hinblick auf eine Schaltfrequenz des Reglers von 5 bis 10 pro Minute zu sehen.

Anhand von Figur 8 wird erläutert, was geschieht, wenn auf den Sensorkörper langsam eine geringe äußere Kraft aufgebracht wird. Solange der dadurch bedingte Druckaufbau merklich größer ist als der durch thermische Effekte bedingte Druckaufbau, wird der Servosektor 35 in Richtung des Pfeils 65 in die gestrichelt dargestellte Stellung bewegt. Da hierbei unter Umständen Unsicherheiten bezüglich eines Ansprechens des Signalgebers 3 eintreten könnten, wird hier eine Anhebung des Störsignals durch folgende Maßnahme bewirkt: Durch teilweise Abschattung des Signalgebers 1 wird der Motor 19a der Druckgasquelle 19 mittels des in Figur 2 gezeigten Servoschaltkreises auf Rückwärtslauf geschaltet, so daß der Druck abgebaut und am Signalgeber 3 ein deutliches Signal erzeugt wird. Hierbei können sich beispielsweise der Regelsektor 35 in die strichpunktiert angedeutete Stellung 35a und der Schaltsektor 34 in die strichpunktiert angedeutete Stellung 34b in Richtung des Pfeiles 65a bewegen. Dadurch wird mittels des Signalgebers 3 ein eindeutig wahrnehmbares Signal erzeugt, das das ausgangsseitige Schaltglied A umschaltet.

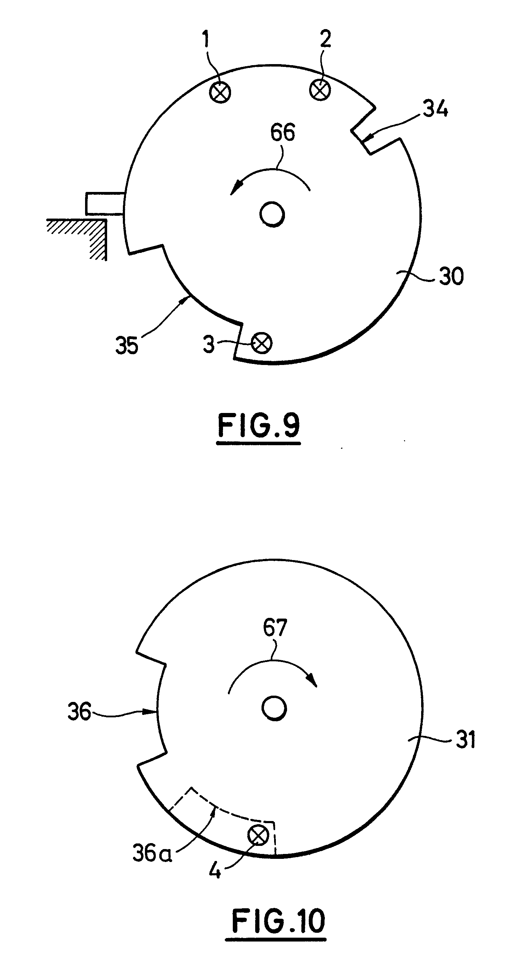

Anhand der Figuren 9 und 10 wird erläutert, was geschieht, wenn ein Schlauch oder der Sensorkörper 10 zwischen den Wandlern 17 und 18 geklemmt wird. In diesem Falle fällt die Scheibe 30 wegen der fortbestehenden Leckrate und des ausbleibenden Nachschubs an Druckgas in Richtung des Pfeils 66 in die Grundstellung gemäß Figur 3 zurück. Eine Störungsmeldung erfolgt über den Signalgeber 3. Da in diesem Falle aber auch das Servosystem durch Sperrung der Signalgeber 1 und 2 die Druckgasquelle einschaltet, aber - (zunächst) nicht mehr ausschalten kann, weil die Scheibe 30 den Druckanstieg nicht mehr registriert, dreht sich die Scheibe 31 des zweiten Wandlers sehr viel stärker in Richtung des Pfeils 67 (Uhrzeigersinn), d.h. der Schaltsektor 36 gelangt aus der gestrichelt dargestellten Position 36a in die ausgezogen dargestellte Position, wodurch der Signalgeber 4 gesperrt wird, was gleichfalls zu einer Störungsmeldung führt, die das gesamte System stillsetzt bzw. blockiert, bis die Störung behoben ist.

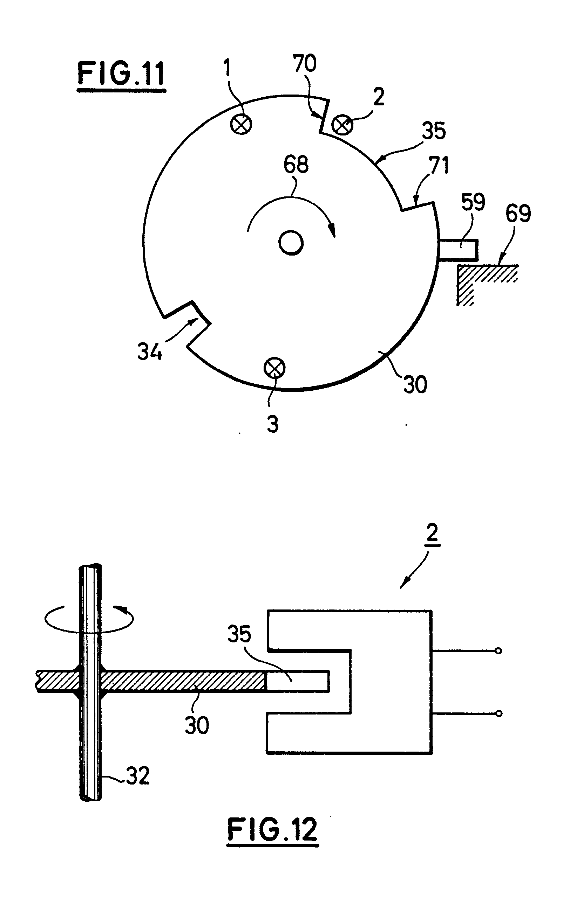

Anhand von Figur 11 wird erläutert, was bei der normalen Funktion des Überwachungssystems geschieht, wenn ein Körperteil oder ein Gegenstand in die Bewegungsbahn des Sensorkörpers 10 gerät und hierdurch einen deutlich wahrnehmbaren Druckstoß erzeugt. Die Scheibe 30 (und analog die Scheibe 31) wird hierbei sehr viel stärker in Richtung des Pfeils 68 (Uhrzeigersinn) verdreht, so daß der Signalgeber 3 deutlich gesperrt wird. (analog wird auch der Signalgeber 4 gesperrt, was hier nicht besonders dargestellt ist). Durch einen Anschlag 69 für den Nocken 59 wird jedoch verhindert, daß die Steuerkante durch den Strahlengang des Signalgebers 2 hindurchbewegt wird. Dies muß unter allen Umständen verhindert werden, da eine Abschattung des Signalgebers 2 zu einem Einschalten der Druckgasquelle führt, was einen weiteren Druckanstieg zur Folge hätte. Im Gegenteil, durch Sperrung des Signalgebers 1 wird auch hier die Antriebsmotor 19a der Druckgasquelle in seinen Rückwärtslauf geschaltet, so daß der Druckanstieg jedenfalls solange abgebaut wird, bis die Verformung des Sensorkörpers aufgehoben wird. Alsdann tritt wieder das weiter oben beschriebene normale Regelverhalten ein.

Anhand von Figur 12 ist dargestellt, daß der Signalgeber 2, der stellvertretend auch für die übrigen Signalgeber 1, 3 und 4 steht, die zugehörige Scheibe 30 bzw. 31 an der Peripherie der Scheibe auf beiden Seiten übergreift. Ein von oben nach unten (oder umgekehrt) verlaufender Strahlengang, der von einer Fotodiode ausgeht und an einem Fototransistor endet, bildet eine kontakt-und rückwirkungsfreie Schalteinheit. In der in Figur 12 dargestellten Stellung der Scheibe 30 gibt der Regelsektor 35 den Strahlengang frei. Sobald jedoch die jenseits der Sektoren liegenden Umfangsteile der Scheiben in den Strahlengang hineinbewegt werden, wird dieser unterbrochen, und der Signalgeber schaltet um.

Es ist aus den Figuren 5 und 11 noch zu ersehen, daß die Steuerkanten des Regelsektors 35 im wesentlichen in radialer Richtung verlaufen. Analoge Verhältnisse gelten natürlich auch für die nicht näher bezeichneten Steuerkanten der Schaltsektoren 34 und 36. Wie aus Figur 5 hervorgeht, liegen in der Stellung "Betriebsbereitschaft" die Signalgeber 1 und 2 in etwa symmetrischer Anordnung in unmittelbarer Nähe der Steuerkanten 70 bzw. 71.

Es ist natürlich auch möglich, den Schaltsektor 34 und den Servosektor 35 auf getrennten Scheiben anzuordnen. Aus Gründen einer möglichst geringen Massenträgheit ist jedoch die anhand des Ausführungsbeispiels beschriebene Ausführungsform anzustreben. Außerdem ist es möglich, die Scheiben 30 und 31 nicht nebeneinander anzuordnen, wie dies in Fig. 1 dargestellt ist, sondern auch koaxial, womit eine wesentliche Platzersparnis eintritt.

## Ansprüche

1. Verfahren zur pneumatisch -elektrischen Überwachung von beweglichen Gegenständen wie Türen, Tore, Sicherheitsschranken und Ventilschieber, mittels eines langgestreckten gasdurchströmten Sensorkörpers (10) , der von einer druckabhängig geschalteten Druckgasquelle (19) mit Gas versorgt wird und dessen Volumen durch äußere Krafteinwirkung veränderbar ist, sowie mittels mindestens eines mit dem Sensorkörper (10) verbundenen pneumatisch-elektrischen Wandlers - (17, 18) durch den im Sensorkörper erzeugte Druckänderungen, die maximale und/oder minimale Grenzwerte über-bzw. unterschreiten, in elektrische Signale umgesetzt werden, dadurch gekennzeichnet, daß man

a) in dem Sensorkörper (10) durch druckabhängig geregelte Gaszufuhr von einer Druckgasquelle (19) auf der einen Seite und durch eine vorgegebene Leckrate auf der anderen Seite des Sensorkörpers (10) einen zwischen den Grenzwerten liegenden vorgegebenen Betriebs-Druckpegel aufrechterhält,

b) den eingeregelten Betriebs-Druckpegel auf beiden Seiten des Sensorkörpers (10) mittels zweier pneumatisch-elektrischer Wandler (17, 18) laufend überwacht und bei Einhaltung des vorgegebenen Betriebs-Druckpegels aud beiden Seiten des Sensorkörpers (10) ein Freigabesignal und bei vorgegebener Abweichung von Betriebsdruckpegel auf mindestens einer Seite des Sensorkörpers (10) ein Sperrsignal erzeugt und

c) die Lieferrate der Druckgasquelle (19) gleichfalls laufend überwacht und bei einem vorgegebenen Unterschreiten der Lieferrate gleichfalls ein Sperrsignal erzeugt.

2. Verfahren nach Anspruch 1, dadurch gekennzeichnet , daß als Druckgasquelle (19) eine intermittierend druckabhängig angesteuerte und elektrisch angetriebene Pumpe verwendet wird, deren Stromversorgung an einen Überwachungskreis angeschlossen ist, in dem beim Ausbleiben eines Einschaltimpulses für die Pumpe (19) während einer vorgegebenen Zeitspanne ein Sperrsignal erzeugt wird.

3. Pneumatisch-elektrisches Überwachungssystem für bewegliche Gegenstände wie Türen, Tore, Sicherheitsschranken und Ventilschieber, mit einem gasgefüllten, hohlen Sensorkörper (10), der an eine druckabhängig geschaltete Druckgasquelle (19) angeschlossen ist und dessen Volumen durch äußere Krafteinwirkung veränderbar ist und der mit mindestens einem pneumatisch-elektrischen Wandler (17, 18) versehen ist, von denen mindestens einer mindestens einen elektrischen Signalgeber (1,2,3,4) aufweist, der in der Stellung "Normalbetrieb" ein Freigabesignal und in der Stellung "Druckänderung" ein Sperrsignal erzeugt und der mindestens einem Schaltglied (52 bis 56) am Ausgang des Überwachungssystems aufgeschaltet ist, dadurch gekennzeichnet, daß

a) ein erster pneumatisch-elektrischer Wandler (17) außer dem mindestens einen elektrischen Signalgeber (3) für das Freigabesignal und das Sperr signal mindestens einen weiteren Signalgeber (1, 2) zur Erzeugung von Regelsignalen für die Druckgasquelle (19) aufweist, derart, daß im System ein im wesentlichen konstanter Betriebs-Druckpegel erzeugbar ist,

b) dem einen Signalgeber (3) des ersten pneumatisch-elektischen Wandlers (17) ein am Ausgang befindliches erstes Schaltglied (A) nachgeordnet ist, das in Stellung "Normalbetrieb" auf Durchgang schaltbar ist,

c) ein zweiter pneumatisch-elektrischer Wandler (18) mit einem weiteren Signalgeber (4) vorhanden ist, der in der Stellung "Normalbetrieb" ein zweites Schaltsignal erzeugt,

d) dem Signalgeber (4) des zweiten pneumatisch-elektrischen Wandlers (18) ein am Ausgang befindliches zweites Schaltglied (B) nachgeordnet ist, das in Stellung "Normalbetrieb" auf Durchgang schaltbar ist,

e) im pneumatischen Teil des Systems eine Auslaßöffnung (41) mit definiertem Querschnitt zur Erzeugung des Betriebs-Druckpegels und einer vorgegebenen Leckrate angeordnet ist, .

f) eine Überwachungsschazltung (42) für die Druckgasquelle (19) mit einer derartigen Ansprechcharakteristik vorgesehen ist, daß beim Ausbleiben eines Druckgasnachschubs innerhalb einer vorgebbaren Zeitspanne eine Stillsetzung des elektrischen Teils des Systems erfolgt, und daß

g) der erste (17) und der zweite pneumatisch-elektrische Wandler (18) in der Weise ausgelegt sind, daß bei Vorliegen einer "Störung" im pneumatischen Teil des Systems mindestens einer der die Schaltsignale erzeugenden Signalgeber (3, 4) in eine "Sperrstellung" umschaltet.

4. Überwachungssystem nach Anspruch 3, dadurch gekennzeichnet, daß die pneumatisch-elektrischen Wandler (17, 18) in an sich bekannter Weise je einen Hohlkörper (22, 23) mit einer elastischen Membran (26, 27) aufweisen, deren druckabhängige Bewegung auf eine Scheibe (30, 31) übertragbar ist, die um eine Achse (32, 33) - schwenkbar und mit mindestens einem Sektor (34, 35, 36) selektiver Durchlässigkeit versehen ist.

5. Überwachungssystem nach Anspruch 4, dadurch gekennzeichnet, daß die Scheiben (30, 31) mit mindestens je einem einen Sektor (34, 35, 36) bildenden Fenster versehen, im übrigen aber lichtundurchlässig sind.

6. Überwachungssystem nach Anspruch 4, dadurch gekennzeichnet, daß die Scheiben (30, 31) als Kreisscheiben ausgebildet und um je eine zentrale Achse (32, 33) drehbar gelagert sind und an ihrer Peripherie mit den Sektoren (34, 35, 36) selektiver Durchlässigkeit versehen sind.

7. Überwachungssystem nach Anspruch 6, dadurch gekennzeichnet , daß die Scheibe (30) des ersten pneumatisch-elektrischen Wandlers (17) einen Schaltsektor (34) aufweist, der dem ersten Signalgeber (3) für die Erzeugung des ersten Schaltsignals zugeordnet ist, sowie an einer anderen stelle des Umfangs einen Regelsektor (35) aufweist, der zwei Signalgebern (1, 2) für die Erzeugung von Regelsignalen für die Aufrechterhaltung des Betriebsdrucks zugeordnet ist.

8. Überwachungssystem nach Anspruch 7, dadurch gekennzeichnet, daß der Regelsektor (35) in Umfangsrichtung von zwei etwa radial verlaufenden Steuerkanten (70, 71) begrenzt ist, zwischen denen in Betriebsstellung die beiden Signalgeber - (1, 2) angeordnet sind.

9. Überwachungssystem nach Anspruch 6, dadurch gekennzeichnet, daß die Scheibe (31) des zweiten pneumatisch-elektrischen Wandlers (18) einen Schaltsektor (36) aufweist, der dem zweiten Signalgeber (4) für die Erzeugung des zweiten Schaltsignals zugeordnet ist, und daß der Schaltsektor (36) gegenüber dem Schaltsektor (34) der Scheibe (30) des ersten Wandlers (17) in Umfangsrichtung um ein solches Maß größer ist, daß das dem zeiten Signalgeber (4) zugeordnete Schaltglied (B) bei Druckerhöhung zuerst schaltet.

10. Überwachungssystem nach Anspruch 3, dadurch gekennzeichnet, daß die Druckgasquelle - (19) eine an sich bekannte elektrisch angetriebene Pumpe ist, deren einer Anschlußkontakt über die Überwachungsschaltung (42) an einen die elektrische Steuerung bewirkenden Mikroprozessor (43) angeschlossen ist, derart, daß beim Ausbleiben eines Stromimpulses am Anschlußkontakt innerhalb einer vorgegebenen Zeitspanne die elektrische Steuerung stillsetzbar ist.

11. Überwachungssystem nach Anspruch 3, dadurch gekennzeichnet, daß die Druckgasquelle - (19) eine Schlauchpumpe ist.

## FIG.1

**FIG.2**

0 228 550

## FIG.3

## FIG.4

**FIG.5**

**FIG.6**

0 228 550

FIG.7

FIG.8

**FIG.9**

**FIG.10**

FIG.11

FIG.12